Europäisches Patentamt

European Patent Office

Office européen des brevets

(19)

(11) Veröffentlichungsnummer: **0 342 200 B1**

(12) # EUROPÄISCHE PATENTSCHRIFT

(45) Veröffentlichungstag der Patentschrift:
28.08.91 Patentblatt 91/35

(51) Int. Cl.⁵: **B60T 8/32**, B60K 41/20

(21) Anmeldenummer: **88901832.1**

(22) Anmeldetag: **23.02.88**

(86) Internationale Anmeldenummer:
**PCT/EP88/00132**

(87) Internationale Veröffentlichungsnummer:
**WO 88/07465 06.10.88 Gazette 88/22**

(54) **ANTIBLOCKIERREGELSYSTEM.**

(30) Priorität: **01.04.87 DE 3710869**

(43) Veröffentlichungstag der Anmeldung:
**23.11.89 Patentblatt 89/47**

(45) Bekanntmachung des Hinweises auf die
Patenterteilung:
**28.08.91 Patentblatt 91/35**

(84) Benannte Vertragsstaaten:
**DE FR GB IT SE**

(56) Entgegenhaltungen:
**EP-A- 0 106 112
FR-A- 2 137 646
FR-A- 2 523 055**

(56) Entgegenhaltungen:
**Ingénieurs de l'Automobile, No. 7, October
1984 (Paris, FR), E. Reinecke: "Système anti-
blocage avec fonctions élargies", pages
110-116, siehe Seite 115, Zelle Spalte 3, Zeilen
17-31**

(73) Patentinhaber: **ROBERT BOSCH GmbH
Postfach 10 60 50
W-7000 Stuttgart 10 (DE)**

(72) Erfinder: **JONNER, Wolf-Dieter
Burgunderstrasse 25
W-7141 Beilstein (DE)**

(74) Vertreter: **Kammer, Arno
Postfach 10 56 08 Grenzhöfer Weg 36
W-6900 Heidelberg 1 (DE)**

**Beschreibung**

Die Erfindung betrifft ein Antiblockierregelsystem mit den Merkmalen des Oberbegriffs des Anspruchs 1.

Ein derartiges Antiblockierregelsystem ist z. B. aus der FR-A-2523055 bekannt.

Problembeschreibung :

Auf niederem Reibbeiwert gibt es insbesondere bei Heckantrieb eine Situation, bei der die Einsteuerung eines Druckniveaus, das der Blockiergrenze der Vorderachse entspricht, die Momentenbilanz an der Hinterachse zwischen Bremsmoment und Antriebsmoment — insbesondere bei hoher Leerlaufdrehzahl im Kaltbetrieb — ein verbleibendes Antriebsmoment ergibt. Dies führt dazu, daß trotz blockierter Vorderachse das Fahrzeug nicht zum Stillstand gelangt. Das Anhalten des Fahrzeugs ist erst möglich bei Steigerung des Bremsdruckes bis zu einem Wert, der das Motorantriebsmoment überwinden kann. Hierzu sind teilweise erhebliche Bremsdrücke und damit hohe Pedalkräfte erforderlich.

Diese Situation kann in der Verbindung eines ABS-Systems nach dem Prinzip der Rückförderung mit einem Vakuumbremskraftverstärker noch verschärft werden, wenn bei teilweise geöffneter Drosselklappe die durch die Druckmodulation verbrauchte Energie nicht ausreichend ersetzt wird und der Aussteuerpunkt des Verstärkers immer mehr absinkt und damit die erforderliche Fußkraft zur Erzielung eines ausreichenden Druckniveaus, um das Antriebsmoment zu überwinden, im Grenzfall auf nicht erreichbare Werte ansteigt.

Aus der geschilderten Problematik kann die Situation entstehen, daß auf glatten Fahrbahnen ein Fahrzeug — insbesondere mit Heckantrieb — selbst mit hohen Pedalkräften nicht anzuhalten ist, es sei denn, der Fahrer kuppelt rechtzeitig aus bzw. bringt den Schalthebel eines Automatikgetriebes in die "Neutral"-Position, was insbesondere im Fall des Automatikgetriebes von "gestressten" Fahrer nicht erwartet werden kann.

Aufgabe und Lösung

Der Erfinder liegt die Aufgabe zugrunde, ein Antiblockierregelsystem so auszugestalten, daß die oben geschilderte Problematik vermieden wird.

Diese Aufgabe wird durch die im Anspruch 1 angegebenen Merkmale gelöst.

In den Unteransprüchen sind Weiterbildungen und Ausbildungsmöglichkeiten der Erfindung beschrieben.

Figurenbeschreibung.

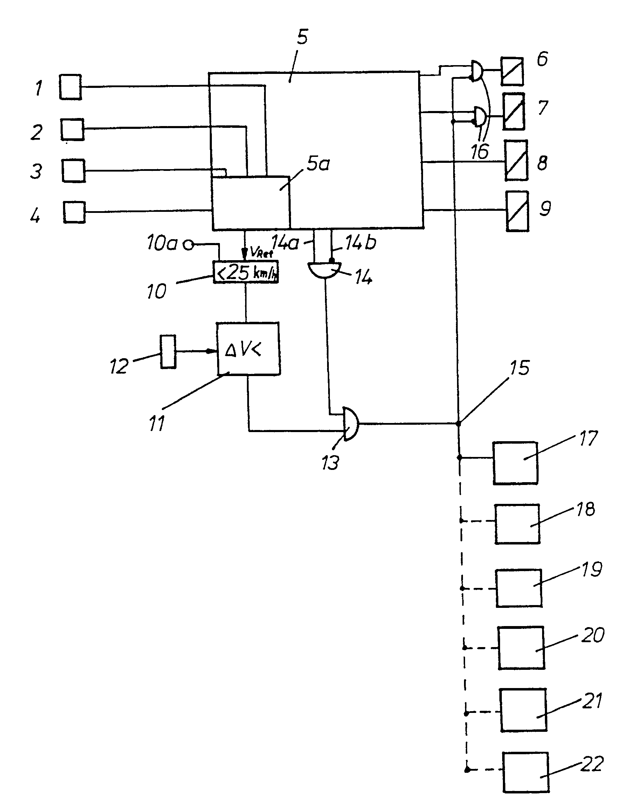

In der Zeichnung ist ein Ausführungsbeispiel eines gemäß der Erfindung ausgestalteten Antiblockierregelsystem als Blockschaltbild dargestellt.

Es enthält vier Meßwertgeber 1 bis 4 für die Radgeschwindigkeiten, die den Vorderrädern (1 und 2) bzw. den angetriebenen Heckrädern (3 und 4) zugeordnet sind. Deren Signale wurden in bekannter Weise einer Auswerteschaltung 5 zugeführt, die aus den zugeführten Meßwertgebersignalen Bremsdrucksteuersignale für die hier als Magnetventile dargestellten Bremsdrucksteuereinrichtungen 6 bis 9 zur Bremsdruckvariation an den Vorderrädern (Ventile 6 und 7) und Heckrädern (Ventile 8 und 9) erzeugt.

Die Auswerteschaltung 5 enthält einen Block 5a, in dem die für die Schlupfregelung benötigte Referenzgeschwindigkeit $V_{Ref.}$ (ein der Fahrzeuggeschwindigkeit angenäherten Geschwindigkeitsverlauf) aus den Radgeschwindigkeitssignalen in bekannter Weise gebildet wird. Diese Referenzgeschwiridigkeit $V_{Ref}$ wird aus der Auswertschaltung 5 herausgeführt und einer Vergleichsstufe 10 zugeführt, der an einer Klemme 10a eine Vergleichsgröße (z.B. 25 Km/h) zugeführt wird. Die Vergleichsstufe 10 läßt Signale durch, die Geschwindigkeitsuerten < 25 Km/h entsprechen und leitet die durchgelassenen Signale einem Block 11 zu, der mit Hilfe eines Taktgebers 12 in Abständen T des Taktgebers prüft, ob die Geschwindigkeitsabnahme $\Delta v$ kleiner ist als es einer vorgegebenen Fahrzeugverzögerung von z.B. 0,05 g entspricht.

Ist dies der Fall, so gibt er ein Steuersignal ab. Dieses Signal kann jedoch nur dann eine Steuerfunktion ausüben, wenn ein Und-Gatter 13 durchlässig ist. Dies ist der Fall, wenn auch ein Und-Gatter 14 durchlässig ist, was dann der Fall ist, wenn einerseits über eine Leitung 14a signalisiert wird, daß der den nicht angetriebenen Vorderrädern zugeordnete Reglerteil aktiviert ist, während über einer Leitung 14b durch ein O-Signal angezeigt wird, daß der den Heckrädern zugeordnete Reglerteil nicht in Betrieb ist.

Somit gelangt ein Steuersignal zum Punkt 15, wenn die Referenzgeschwindigkeit unter 25 Km/h liegt, diese nur um einen geringeren Wert abnimmt und nur die nicht angetriebenen Vorderräder (bzw. wenigstens eines davon) geregelt werden.

Dann wird entweder

1. die ABS-Funktion an der nicht angetriebenen Achse, sofern dies die Vorderachse ist, über Und-Gatter 16 abgeschaltet

2. und/oder die Schubabschaltung (Block 17) unter Umgehung der Motordrehzahlabhängigkeit aktiviert

3. und/oder die Zündung und/oder Einspritzung unterbrochen (Blöcke 18, 19)

4. und/oder der Zündwinkel auf Spätzündung um einen max. zulässigen Bertag verstellt (Block 20)

5. und/oder eine automatische Motorabkopplung bei Handschaltgetriebe durch einen elektrisch/hydraulischem betätigbaren Kupplungseingriff vorgenommen (Block 21)

6. und/oder ein Automatikgetriebe mittels einer steuerbaren Schaltung elektro/hydraulisch in die höchste Gangstufe bzw. in die "Neutral"-Stellung elektro/hydraulisch gestellt (Block 22)

Die ergriffene Maßnahme bleiben wirksam bis das Fahrzeug zum Stillstand gelangt ist bzw. die Bremse gelöst wird.

Der Vorteil der Erfindung liegt in der Erfassung eines kritischen Fahrzustandes, bei dem das Fahrzeug mit der aufgewendeten Pedalkraft nicht angehalten werden kann bzw. bei dem durch die Bremskraftverstärkung viel Energie verbraucht wird.

## Patentansprüche

1. Antiblockierregelsystem für ein Kraftfahrzeug, bei dem mittels den Rädern zugeordneten Meßwertgeber (1-4), einer Auswertschaltung (5) und Bremsdrucksteuereinrichtungen (6-9) zumindest der Bremsdruck an den Rädern der Achsen, von denen eine angetrieben ist, getrennt geregelt wird, dadurch gekennzeichnet, daß bei aktivierter Antiblockierregelung lediglich an der nicht angetriebenen Achse des Fahrzeugs (Und-Gatter 13 und 14) die Änderung der Fahrzeuggeschwindigkeit dahingehend überwacht wird (durch 11 und 12), ob die Geschwindigkeitsabnahme in vorgegebenen Zeiträumen einen vorgegebenen kleinen Wert unterschreitet und daß bei Unterschreiten des kleinen Werts die ABS-Funktion an der nicht angetriebenen Achse abgeschaltet (Und-Gatter 16) und/oder das auf die Antriebsräder wirkende Antriebsmoment wenigstens verringert wird (Blöcke 18-20).

2. Antiblockierregelsystem nach Anspruch 1, dadurch gekennzeichnet, daß die Abschaltung des Antiblockierregelsystems nur an der Vorderachse erfolgt.

3. Antiblockierregelsystem nach Anspruch 1 oder 2, dadurch gekennzeichnet, daß die Überwachung der Geschwidigkeitsänderung nur bei kleiner Fahrzeuggeschwindigkeit (z.B. bis 25 km/h) erfolgt (Block 10).

4. Antiblockierregelsystem nach einem der Ansprüche 1-3, dadurch gekennzeichnet, daß die Fahrzeuggeschwindigkeit aus der für die Schlupfregelung benötigten Referenzgeschwindigkeit des Antiblockierreglers abgeleitet wird (Block 5a).

5. Antiblockierregelsystem nach einem der Ansprüche 1-4, dadurch gekennzeichnet, daß zur Beeinflussung des Antriebsmoments die Schubabschaltung aktiviert wird (Block 17).

6. Antiblockierregelsystem nach einem der Ansprüche 1-4, dadurch gekennzeichnet, daß zur Beeinflussung des Antriebsmoments die Zündung unterbrochen wird (Block 18).

7. Antiblockierregelsystem nach einem der Ansprüche 1-4, dadurch gekennzeichnet, daß zur Beeinflussung des Antriebsmoments die Einspritzung unterbrochen wird (Block 19).

## Claims

1. Anti-blocking control system for a motor vehicle, in which at least the brake pressure at the wheels of the axles, of which one is driven, is separately controlled by means of sensors (1-4) assigned to the wheels, an evaluation circuit (5) and brake-pressure control devices (6-9), characterised in that, when anti-blocking control is activated, the change in the vehicle speed is monitored (by 11 and 12) exclusively at the non-driven axle of the vehicle (AND gates 13 and 14) to establish whether the speed reduction in predetermined time periods falls below a predetermined small value and in that if the reduction falls below the small value the ABS function of the non-driven axle is switched off (AND gate 16) and/or the driving torque acting on the driving wheels is at least reduced (blocks 18-20).

2. Anti-blocking control system according to Claim 1, characterised in that the anti-blocking control system is switched off only at the front axle.

3. Anti-blocking control system according to Claim 1 or 2, characterised in that the speed change is monitored only at low vehicle speed (e.g. up to 25 km/h) (block 10).

4. Anti-blocking control system according to one of Claims 1-3, characterised in that the vehicle speed is derived from the anti-blocking controller reference speed required for slip control (block 5a).

5. Anti-blocking control system according to one of Claims 1-4, characterised in that the overrun fuel cut-off is activated in order to influence the driving torque (block 17).

6. Anti-blocking control system according to one of Claims 1-4, characterised in that ignition is interrupted in order to influence the driving torque (block 18).

7. Anti-blocking control system according to one of Claims 1-4, characterised in that injection is interrupted in order to influence the driving torque (block 19).

## Revendications

1. Système de régulation anti-blocage de véhicule automobile comprenant des capteurs de mesure (1-4) associés aux roues, un circuit d'exploitation (5) et des dispositifs de commande de pression de frein (6-9) assurant la régulation séparée d'au moins la pression de frein des roues des essieux dont l'un est moteur, système caractérisé en ce que lorsque le système anti-blocage est activé, on surveille uniquement en continu la variation de la vitesse du véhicule sur l'essieu non entraîné du véhicule (portes ET 13 et 14) (surveillance par 11 et 12) pour vérifier que la diminution de vitesse passe en-dessous d'une petite valeur prédéterminée pour des intervalles de temps prédéterminés et en ce qu'en dépassant vers le bas la petite valeur, la fonction ABS des roues de l'essieu non moteur est coupée (porte ET 16) et/ou le couple moteur agissant sur les roues motrices est au moins diminué (blocs 18-20).

2. Système de régulation anti-blocage selon la revendication 1, caractérisé en ce que la coupure du système de régulation anti-blocage ne se fait que sur l'essieu avant.

3. Système de régulation anti-blocage selon la revendication 1 ou 2, caractérisé en ce que la surveillance de la variation de vitesse ne se fait qu'aux faibles vitesses du véhicule (jusqu'à 25 km/h) (bloc 10).

4. Système de régulation anti-blocage selon l'une des revendications 1-3, caractérisé en ce que la vitesse du véhicule est dérivée de la vitesse de référence du régulateur anti-blocage, vitesse de référence nécessaire pour la régulation du glissement (patinage) (bloc 5a).

5. Système de régulation anti-blocage selon l'une des revendications 1 à 4, caractérisé en ce que pour influencer le couple moteur on met en oeuvre le circuit de coupure de propulsion (bloc 17).

6. Système de régulation anti-blocage selon l'une des revendications 1-4, caractérisé en ce que pour influencer le couple moteur, on coupe l'allumage (bloc 18).

7. Système de régulation anti-blocage selon l'une des revendications 1-4, caractérisé en ce que pour influencer le couple moteur, on coupe l'injection (bloc 19).